# FASCICULE DE BREVET EUROPEEN

(11) **EP 3 506 092 B1**
(45) Date de publication et mention de la délivrance du brevet: **26.04.2023**
(21) Numéro de dépôt: 18215974.9
(22) Date de dépôt: 31.12.2018
(51) Int. Cl.: G06F 9/455, G06F 9/50

(54) **ORDINATEUR CENTRAL AYANT UN ENVIRONNEMENT LOGICIEL MAINFRAME PROPRIÉTAIRE VIRTUALISÉ**
ZENTRALRECHNER MIT EINER VIRTUALISIERTEN UMGEBUNG FÜR PROPRIETÄRE MAINFRAME SOFTWARE
CENTRAL COMPUTER WITH A VIRTUALIZED LEGACY MAINFRAME SOFTWARE ENVIRONMENT

(30) Priorité: 29.12.2017 FR 1763385
(43) Date de publication de la demande: 03.07.2019
(73) Titulaire: BULL SAS, 78340 Les Clayes-sous-Bois (FR)
(72) Inventeur: VALLEE, Florence, 75015 Paris (FR); BLEUZE, Patrice, 78380 Bougival (FR); BONNEL, Thierry, 95220 Herblay (FR); HEITZ, Jean-Luc, 75020 Paris (FR)
(74) Mandataire: Cabinet Camus Lebkiri

(56) Documents cités:
- US-A1- 2002 156 824
- US-A1- 2009 055 830
- US-A1- 2011 154 322
- Anonymous: "Hitachi Virtage Embedded Virtualization Datasheet", , octobre 2008 (2008-10), pages 1-6, XP055524707, Extrait de l'Internet: URL:http://www.hitachi-america.us/supporti ngdocs/forbus/ssg/pdfs/Hitachi_Datasheet_V irtage_3D_10-30-08.pdf [extrait le 2018-11-19]

## Description

La présente invention se rapporte de manière générale au domaine des ordinateurs centraux (en anglais « mainframe computer ») ou serveurs, aussi appelé machines Mainframes, ou simplement Mainframes dans le langage de l'Homme du métier.

L'invention concerne en particulier un ordinateur central ayant un environnement logiciel Mainframe propriétaire virtualisé, et plus particulièrement dans une première machine virtuelle apte à s'exécuter sur un hyperviseur de virtualisation par exemple du marché.

### [Art antérieur]

Un Mainframe est un ordinateur de grande puissance de traitement, qui sert d'unité centrale à un réseau de terminaux. Jusque dans les années 1980, de tels ordinateurs fonctionnaient selon un modèle centralisé, qui s'oppose aux modèles répartis. De tels ordinateurs centraux sont utilisés dans les très grandes organisations, qu'elles soient publiques (comme des administrations françaises) ou privées (comme des banques ou des compagnies d'assurance). Les ordinateurs centraux permettent le traitement de très grandes bases de données accédées par des dizaines ou des centaines de milliers d'utilisateurs, sous des contraintes de fiabilité très élevées.

A leur origine, dans les années 1960, les Mainframes étaient tous des systèmes propriétaires, c'est-à-dire des plateformes globales composées de matériels et de logiciels propres à chaque fabricant. On parle de matériels / logiciels propriétaires (« legacy hardware / software », en anglais).

Puis, à partir du milieu des années 1980, on a commencé à considérer la séparation du matériel d'une part et du logiciel d'autre part. Cette séparation a été proposée pour des raisons de compétitivité sur le prix, du fait de l'apparition de processeurs à plus faible coût que celui des processeurs propriétaires des fabricants historiques de Mainframes. Les concepteurs de circuits ont en effet été conduits à réexaminer leur stratégie d'investissements en recherche et développement dans le domaine des processeurs. Les volumes de production atteints sur le marché des micro-ordinateurs et sur celui des stations de travail à partir des années 1980, permettaient en effet à des concepteurs de circuits comme Intel d'amortir leurs investissements avec un levier extrêmement plus considérable que pour les constructeurs de Mainframes.

De ce fait, une première couche de virtualisation a été introduite dans les Mainframes à partir du début des années 2000, afin de pouvoir faire tourner une émulation du système d'exploitation propriétaire (par exemple GCOS pour les Mainframes DPS/7 et DPS/8 de BULL), sur un système d'exploitation ouvert (*i.e.,* du marché, de type Windows@ de Microsoft ou AIX^{®} de IBM) sur une plateforme matérielle du marché (de type Intel, BULL, NEC, etc.) comprenant notamment des processeurs (ou CPU, de l'anglais « *Central Processing Unit* ») du marché (« *Commodityprocessors* » en anglais).

Le maintien d'un système d'exploitation propriétaire pour les machines Mainframes sur architecture matérielle du marché découlait de la nécessité de respecter des exigences particulières propres à ces machines, en termes de performance, de fiabilité et de disponibilité, que seul un système d'exploitation propriétaire spécifiquement conçu et utilisé pour ce type de machines, permettait (et permet toujours) de satisfaire. En outre, il convenait bien sûr d'assurer les clients existants que leurs applications resteraient exécutables en l'état (c'est-à-dire au niveau binaire sans recompilation), et que leurs investissements en matériels seraient préservés c'est-à-dire que la majorité des périphériques seraient re-connectables nonobstant l'abandon de la plateforme matérielle propriétaire.

Dans ce contexte, les machines BULL de la famille DPS 7000 / XTA (où l'acronyme XTA est mis pour « eXtended Twin Architecture ») ont permis l'émulation du système d'exploitation propriétaire GCOS 7 et de tout son environnement, sur une nouvelle plateforme matérielle du marché, en l'occurrence l'architecture Intel@ (ou IA, mis pour « *Intel Architecture* »), commandée par un système d'exploitation du marché, en l'occurrence *Microsoft Windows^{®}*, fonctionnant comme un serveur. Cette émulation de GCOS 7 sur l'architecture IA repose sur le logiciel de virtualisation V7000 fourni par BULL avec ses serveurs. C'est pourquoi, pour désigner la spécificité de ces machines Mainframes dans lesquelles l'environnement GCOS 7 est géré sur une plateforme du marché (matériel et système d'exploitation du marché), on se réfère généralement à des machines virtuelles V7000.

Parallèlement des besoins nouveaux des utilisateurs ont fait leur apparition : le besoin de concentrer les machines Mainframes, c'est-à-dire par exemple de regrouper l'exécution de plusieurs applications sur un même système d'exploitation ; le besoin de diminuer le nombre de machines physiques, et/ou de les regrouper sur un même site, etc. Ceci a conduit à étendre le système d'exploitation en termes de capacité de gestion de la mémoire et d'accueil de périphériques de stockage, d'augmenter les performances, etc.

De nombreuses solutions ont pu être considérées, voire explorées, sans pour autant constituer des réalisations abouties constituant nécessairement un art antérieur identifié comme élément de l'état de la technique.

Afin d'optimiser l'infrastructure informatique de machines Mainframes, une première solution peut consister à étendre les capacités de traitement du Mainframe lui-même. Cette augmentation de la capacité d'un Mainframe peut être obtenue en réalisant des extensions dans les composants logiciels de base du système d'exploitation du Mainframe. Cela peut permettre d'assurer la consolidation des serveurs propriétaires et la mutualisation des applications sur une même machine. En effet, une machine plus puissante permet de remplacer plusieurs autres machines moins puissantes. Cependant, l'architecture générale des Mainframes a été conçue à une époque où les capacités des systèmes informatiques étaient réduites en termes de puissance de calcul ou de traitement (liée au nombre de processeurs), de capacité de la mémoire vive, de capacité des disques, de nombre d'applications en exécution simultanément, par exemple. Il s'ensuit que les contraintes d'architecture des Mainframes empêchent de continuer dans cette voie d'évolution.

Une autre solution pourrait consister à développer un hyperviseur de virtualisation propriétaire, qui permettrait de faire tourner un Mainframe plus complexe. Mais une telle solution apparaît comme étant trop restrictive. Elle ne permettrait pas, en particulier, d'intégrer le Mainframe dans un environnement hétérogène et ouvert.

Une autre solution encore, serait de transformer le Mainframe en une application banalisée tournant dans une machine virtuelle. Par exemple, le document US 2011/154322 A1 divulgue un procédé de virtualisation ordinaire permettant d'obtenir un environnement logiciel virtualisé (e.g. une partition logique) afin d'exécuter un système d'exploitation et de lui assigner des ressources physiques dédiés (e.g. processeurs). Ce document décrit aussi la possibilité d'assigner temporairement les processeurs dédiés à une partition logique particulière à un pool de ressources partagées entre les différentes partitions logiques existantes. Toutefois, une telle solution ne permettrait pas de garantir le niveau de performances, la sécurité et la fiabilité qui sont propres aux machines Mainframes.

Ainsi, il existe un besoin pour un nouveau dispositif de type ordinateur central comportant un environnement logiciel Mainframe propriétaire et capable de répondre aux problèmes engendrés par les solutions existantes.

### [Problème techniauel

La présente invention a donc pour but de remédier aux inconvénients de l'état de l'art et s'inscrit dans la continuité de l'évolution technologique des ordinateurs centraux qui a été présentée plus haut. En résumé il s'est agi, dès lors, d'étendre les limites du système d'exploitation propriétaire. Cependant, on a désormais atteint la limite de ce qui était faisable avec cette architecture des machines Mainframes à système d'exploitation propriétaire virtualisé. On notera que l'invention a été réalisée dans un contexte où la tendance générale en informatique est de faire des machines virtuelles pour faire de l'informatique à la demande, mais alors que l'Homme du métier sait néanmoins que la technique de virtualisation se heurte, à l'évidence, aux spécificités des machines Mainframes. En effet, l'exécution d'un système d'exploitation propriétaire d'un ordinateur central dans une machine virtuelle s'exécutant sur un hyperviseur de virtualisation est soumise à des contraintes qui ne sont généralement pas supportées par les hyperviseurs de virtualisation.

Le problème est de définir une nouvelle technique de virtualisation d'un Mainframe assurant la garantie des ressources et des performances à un même niveau que l'exécution d'un Mainframe directement sur une plate-forme matérielle dédiée, comme la plateforme historique des ordinateurs centraux DPS 7000 de BULL.

### [Brève description de l'invention]

L'invention est exposée dans le jeu de revendications joint.

A cet effet, l'invention propose de mettre en oeuvre un second niveau de virtualisation, en plus de la virtualisation déjà utilisée dans les machines BULL de la famille DPS 7000 / XTA qui a été présentée en introduction. Le principe des modes de réalisation consiste à exploiter l'environnement logiciel Mainframe propriétaire dans une machine virtuelle (ou VM, de l'anglais « *Virtual Machine* ») au sens d'un hyperviseur de virtualisation, par exemple du marché, comme par exemple un logiciel de la gamme de logiciels de virtualisation VMware. Dit autrement, le principe général des modes de réalisation de l'invention consiste à faire tourner le système d'exploitation propriétaire comme GCOS 7, qui lui-même est émulé sur un système d'exploitation comme Microsoft Windows^{®} (i.e. un système d'exploitation du marché), dans une machine virtuelle s'exécutant sur un hyperviseur de virtualisation comme VMware^{™} vSphere^{®} (i.e. un système d'exploitation du marché). Mais l'invention ne se limite pas à cela. En effet, les modes de réalisation proposés permettent en outre de satisfaire les spécifications contraignantes des Mainframes existants, concernant les aspects sécurité/fiabilité, performance opérationnelle et disponibilité. Or, atteindre un tel résultat est chose compliquée dans un environnement virtualisé géré par un hyperviseur de virtualisation (e.g. un hyperviseur de virtualisation du marché). En effet, sur un hyperviseur de virtualisation comme ceux de la gamme VMware (i.e. un hyperviseur de virtualisation du marché), toutes les machines virtuelles se partagent les processeurs et la mémoire, en raison précisément du principe et des objectifs de la virtualisation qui reposent sur le partage des ressources et la flexibilité des applications dans l'utilisation mutualisée de ces ressources. L'hyperviseur de virtualisation est nativement conçu pour optimiser le partage des ressources de ce point de vue. Ainsi, le fait d'encapsuler le Mainframe dans une machine virtuelle s'exécutant sur un hyperviseur de virtualisation standard est a priori incompatible avec le respect des impératifs de sécurité/fiabilité, de performance opérationnelle et de disponibilité des Mainframes.

En particulier, l'invention propose un Ordinateur central comportant :
- une plateforme matérielle avec des ressources matérielles comprenant des processeurs et de la mémoire ;
- un logiciel hyperviseur de virtualisation ;
- un environnement logiciel Mainframe propriétaire dont au moins une instance est apte à s'exécuter sur l'architecture matérielle, dans au moins une première machine virtuelle (ou machine virtuelle Mainframe) pouvant s'exécuter sur l'hyperviseur de virtualisation,
l'environnement logiciel Mainframe propriétaire comportant :
- un logiciel simulateur propriétaire;
- un système d'exploitation propriétaire apte à s'exécuter sur le logiciel simulateur propriétaire, et chargé d'assurer la liaison entre les ressources matérielles du premier pool de ressources matérielles à travers le logiciel simulateur propriétaire, d'une part, et des applications conçues pour s'exécuter sur ledit système d'exploitation propriétaire, d'autre part, lorsque lesdites applications sont exécutées ; ainsi que,
- un système d'exploitation ouvert, sur lequel peuvent s'exécuter le simulateur propriétaire et le système d'exploitation propriétaire;
- dans lequel :
   l'hyperviseur de virtualisation est configuré de manière à créer un premier pool de ressources matérielles de la plateforme matérielle (ou pool de ressources Mainframe privilégié) qui est dédié à l'hébergement, exclusivement, de la au moins une première machine virtuelle dans laquelle l'instance de l'environnement logiciel Mainframe propriétaire peut s'exécuter.

En d'autres termes, l'invention propose une nouvelle technique de virtualisation d'un Mainframe assurant la garantie des ressources et donc des performances à un même niveau que l'exécution d'un Mainframe directement sur une plate-forme matérielle dédiée, comme dans les ordinateurs centraux existants.

En effet, grâce à la configuration de l'hyperviseur de virtualisation qui crée un pool de ressources matérielles dédié à l'environnement Mainframe, on arrive à garantir une quantité de ressources offerte au système d'exploitation propriétaire, GCOS 7 par exemple, et ce quelle que soit la charge de l'hyperviseur de virtualisation.

Avantageusement, la technique de virtualisation est pleinement compatible avec les fonctionnalités des hyperviseurs de virtualisation pour bénéficier, à la fois, de la fiabilité des Mainframes et de l'optimisation de l'infrastructure informatique que la virtualisation peut apporter.

L'instance de l'environnement logiciel Mainframe propriétaire comprend :
- un logiciel simulateur propriétaire ;
- un système d'exploitation propriétaire apte à s'exécuter sur le logiciel simulateur propriétaire, et chargé d'assurer la liaison entre les ressources matérielles du premier pool de ressources matérielles à travers le logiciel simulateur propriétaire, d'une part, et des applications conçues pour s'exécuter sur ledit système d'exploitation propriétaire, d'autre part, lorsque lesdites applications sont exécutées.

Ainsi, la machine virtuelle Mainframe peut reprendre le même montage que les instances GCOS 7 dans les serveurs DPS 7000 /XTA de BULL ATOS, sans modifications.

L'instance de l'environnement logiciel Mainframe propriétaire peut comprendre, en outre, un ou plusieurs composants d'interopérabilité entre le système d'exploitation propriétaire et des systèmes ouverts et des bases de données externes avec lesquels il peut communiquer et interagir, lesdits composants d'interopérabilité pouvant s'exécuter sur le système d'exploitation ouvert. Ceci permet de profiter des bases de données et des logiciels du monde ouvert, comme dans les serveurs DPS 7000 /XTA de BULL ATOS.

Dans des modes de mise en oeuvre, le logiciel hyperviseur de virtualisation est capable de faire tourner plusieurs instances de l'environnement logiciel Mainframe propriétaire, avec des modèles de performances respectifs, dans des machines virtuelles respectives pouvant s'exécuter concurremment sur la plateforme matérielle en étant toutes hébergées dans le premier pool de ressources matérielles de la plateforme matérielle. Le pool Mainframe de ressources matérielles hébergeant la ou les machines virtuelles de l'environnement Mainframe peut donc être défini en fonction du modèle de performances visé en termes de puissance de traitement (associée aux processeurs) et ressource mémoire, et en fonction du nombre d'instances de machines virtuelles Mainframes.

Avantageusement, l'ordinateur central peut également comprendre un environnement logiciel ouvert, dont au moins une instance est apte à s'exécuter concurremment sur la plateforme matérielle, dans au moins une seconde machine virtuelle (ou machine virtuelle Cliente) pouvant s'exécuter sur le logiciel hyperviseur de virtualisation, et, dans un tel cas :
- les ressources matérielles de la plateforme matérielle comprennent un second pool de ressources matérielles (ou pool de ressources Client) créé par configuration de l'hyperviseur de virtualisation, pour l'hébergement, exclusivement, de la au moins une seconde machine virtuelle ; et,
- l'environnement logiciel ouvert comprend un système d'exploitation ouvert chargé d'assurer la liaison entre les ressources matérielles du second pool de ressources matérielles, d'une part, et des applications du monde ouvert conçues pour s'exécuter sur ledit système d'exploitation ouvert, d'autre part, lorsque lesdites applications sont exécutées.

Le client bénéficie alors de toutes les possibilités offertes par le « monde ouvert », avec la possibilité d'exécuter sur l'ordinateur central des applications qui, le cas échéant, tournent sur un autre système d'exploitation comme Linux^{®} ou Unix^{®}. Il peut notamment déployer des telles applications qu'il a développées ou qui lui appartiennent, sans lien avec le fabricant de son ordinateur central.

Dans des modes de mises en oeuvre, le logiciel hyperviseur de virtualisation est capable de faire tourner plusieurs instances de machines virtuelles de l'environnement logiciel ouvert pouvant s'exécuter concurremment sur la plateforme matérielle, en étant toutes hébergées dans le second pool de ressources matérielles de la plateforme matérielle (pool Client).

Un second aspect de l'invention concerne un procédé de configuration d'un ordinateur central pour obtenir un ordinateur central ayant un environnement logiciel Mainframe propriétaire virtualisé, ledit ordinateur comportant une plateforme matérielle avec des ressources matérielles comprenant des processeurs et de la mémoire, le procédé comprenant les étapes suivantes :
- installation d'un logiciel hyperviseur de virtualisation (par exemple un logiciel hyperviseur de virtualisation du marché) ;
- installation d'un système d'exploitation ouvert ;
- installation d'un environnement logiciel Mainframe propriétaire, comportant un logiciel simulateur propriétaire et un système d'exploitation propriétaire, dont au moins une instance est apte à s'exécuter sur l'architecture matérielle, dans au moins une première machine virtuelle pouvant s'exécuter sur l'hyperviseur de virtualisation, l'installation d'un environnement logiciel Mainframe comportant les sous-étapes suivantes :
   - l'installation du logiciel simulateur propriétaire de manière qu'il puisse s'exécuter sur le système d'exploitation ouvert;
   - l'installation du système d'exploitation propriétaire de manière qu'il puisse s'exécuter sur le logiciel simulateur propriétaire, afin d'assurer la liaison entre les ressources matérielles du premier pool de ressources matérielles à travers le logiciel simulateur propriétaire, d'une part, et des applications conçues pour s'exécuter sur ledit système d'exploitation propriétaire, d'autre part, lorsque lesdites applications sont exécutées alors que le simulateur propriétaire et le système d'exploitation propriétaire s'exécutent sur le système d'exploitation ouvert; et,
   - configuration de l'hyperviseur de virtualisation de manière à créer un premier pool de ressources matérielles de la plateforme matérielle qui est dédié à l'hébergement, exclusivement, de la au moins une première machine virtuelle dans laquelle l'instance de l'environnement logiciel Mainframe propriétaire peut s'exécuter.

En particulier, les étapes du procédé de configuration peuvent mises en oeuvre selon les instructions d'un opérateur transformées en une série de commandes interprétées par l'ordinateur central.

L'installation de l'environnement logiciel Mainframe propriétaire comprend :
- l'installation d'un logiciel simulateur propriétaire de manière qu'il puisse s'exécuter sur le système d'exploitation ouvert ;
- l'installation d'un système d'exploitation propriétaire de manière qu'il puisse s'exécuter sur le logiciel simulateur propriétaire, afin d'assurer la liaison entre les ressources matérielles du premier pool de ressources matérielles à travers le logiciel simulateur propriétaire, d'une part, et des applications conçues pour s'exécuter sur ledit système d'exploitation propriétaire, d'autre part, lorsque lesdites applications sont exécutées alors que le simulateur propriétaire et le système d'exploitation propriétaire s'exécutent sur le système d'exploitation ouvert.

D'autres avantages et caractéristiques de l'invention apparaitront à la lecture de la description suivante donnée à titre d'exemple illustratif et non limitatif, en référence aux Figures annexées qui représentent :
- **Figure 1****,** un diagramme fonctionnel d'un ordinateur central du type DPS 7000 /XTA ou Bullion, dans lequel le système d'exploitation propriétaire GCOS 7 s'exécute sur une émulation de la plateforme matérielle attendue qui est procurée par un simulateur propriétaire, à savoir V7000 ; et,
- **Figure 2****,** un diagramme fonctionnel illustrant l'encapsulation de l'environnement Mainframe d'un ordinateur central dans une machine virtuelle s'exécutant sur un hyperviseur de virtualisation, conformément à des modes de réalisation de l'invention.

### [Description de l'invention]

Dans la suite de la description, on entend par « système d'exploitation propriétaire », « logiciel mainframe propriétaire » ou encore « logiciel simulateur propriétaire », un système d'exploitation, un logiciel mainframe et un logiciel simulateur propres à un constructeur ou à un éditeur de logiciel donné. L'homme du métier appréciera qu'en fonction d'un environnement Mainframe considéré, notamment en lien avec divers constructeurs et/ou éditeurs de logiciels, l'architecture matérielle et/ou logicielle de ce-dernier sera sensiblement différente.

Également, on entend par « un système d'exploitation ouvert », ou encore « un environnement logiciel ouvert » tout système informatique configuré pour permettre des accès non restreints par des personnes et/ou d'autres systèmes informatiques, notamment sur lequel il est possible d'exécuter des applications qui sont mises en oeuvre par un système d'exploitation comme Linux^{®} ou Unix^{®}, dont le code source est disponible, permettant ainsi un haut niveau d'interopérabilité entre le matériel informatique et les applications exécutées.

Dans la description de modes de réalisation qui va suivre et dans les dessins annexés, les mêmes éléments ou des éléments similaires portent les mêmes références numériques aux figures.

Un ordinateur central, ou Mainframe, est un système multiprocesseur utilisé dans des environnements de production de données transactionnels et interactifs, et de traitement de données par lots. Il est dédié aux applications critiques des organisations (administrations publiques, entreprises, etc.) qui doivent fonctionner sous de fortes contraintes comme la haute disponibilité, la sécurité et l'interopérabilité avec les systèmes ouverts. Il permet son utilisation par un grand nombre d'utilisateurs transactionnels simultanés.

Un Mainframe est basé sur un système d'exploitation propriétaire assurant toutes les fonctions de base. En particulier, il prend en charge la gestion de la mémoire virtuelle, l'ordonnancement des traitements, la supervision des entrées/sorties, le partage et l'optimisation de l'utilisation des ressources, etc. Les opérations d'entrée-sortie comprennent les accès aux périphériques traditionnels, dont un lecteur de cartouche (i.e., de bandes), et la réception et la transmission de données via le(s) réseau(x) de télécommunications au(x)quel(s) le Mainframe est connecté. Pour assurer ces opérations, l'architecture matérielle comprend des adaptateurs, comme des cartes réseau, par exemple.

La description de modes de réalisation de l'innovation sera donnée ci-après en référence à un exemple d'application à une machine Mainframe utilisant le système d'exploitation propriétaire GCOS 7 de BULL ATOS. Il est bien entendu cependant, que la mise en oeuvre de l'invention ne se limite pas à cet exemple.

On va tout d'abord décrire l'architecture classique des machines Mainframes, telles que les serveurs de la famille Bullion. C'est une famille de serveurs développée par BULL ATOS. Ils supportent les applications Mainframe sous GCOS 7, qui est un système d'exploitation propriétaire de BULL ATOS. Ces machines exécutent une instance du système d'exploitation propriétaire GCOS 7, à travers une machine virtuelle V7000 établie sur un système d'exploitation ouvert (e.g. du marché) comme *Microsoft^{™} W2102R2^{®}* ou *Microsoft Windows Server^{®},* tournant sur une architecture matérielle Intel^{®} (IA) basée sur des processeurs 32-bits Intel^{™} Xeon^{®} E7. V7000 est un logiciel simulateur propriétaire, qui émule la plateforme matérielle propriétaire à laquelle s'attend le système d'exploitation propriétaire GCOS 7, à partir de la plateforme Intel^{®} (e.g. du marché) réellement utilisée.

L'Homme du métier appréciera, toutefois, que ceci n'est qu'un exemple de serveur Mainframe auquel le principe de l'invention peut être appliqué. Celui-ci peut en effet trouver des applications avantageuses dans d'autres serveurs Mainframes s'appuyant sur d'autres plateformes matérielles, par exemple les ordinateurs centraux de la gamme Novascale^{®} de BULL ATOS qui tournent sur une architecture matérielle Intel^{™} (IA) basée sur des processeurs 64-bits Intel^{™} Itanium^{®}. En effet, la mise en oeuvre de l'invention est indépendante de la plateforme matérielle du serveur.

Bien entendu, l'invention s'applique plus généralement à tout type de serveur Mainframe reposant sur l'exécution d'un système d'exploitation propriétaire.

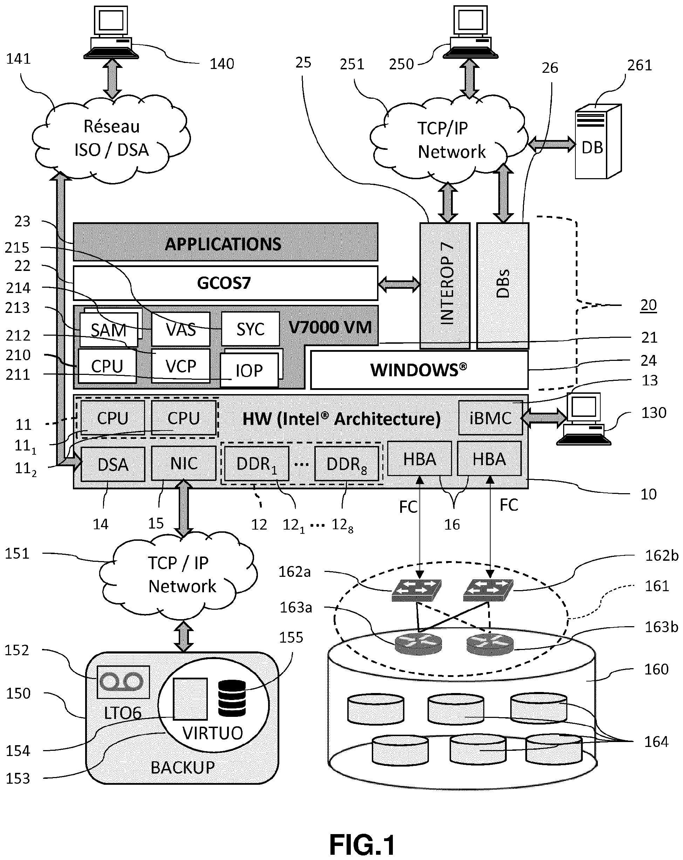

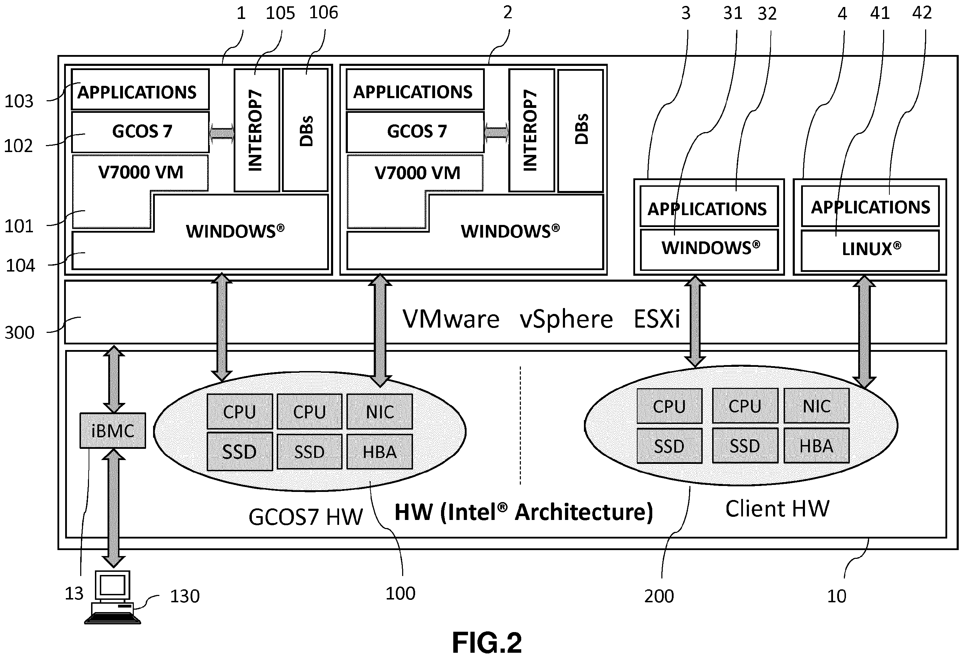

Le diagramme fonctionnel de la **Figure 1** montre schématiquement, à titre d'exemple seulement comme il est dit ci-dessus, la plateforme matérielle 10 et les couches logicielles 20 d'un module serveur Bullion S2 de la gamme Bullion, de BULL ATOS. Cet exemple servira de base pour la description de modes de réalisation en référence à la Figure 2.

L'architecture matérielle 10 est une architecture Intel^{™} (IA), qui comprend des processeurs Intel^{™} comme les processeurs Intel^{™} Xeon^{®} E7 v4. En variante, il peut aussi s'agir de processeurs Intel^{®} 64-bits Itanium^{®}. Les processeurs Intel^{™} Xeon^{®} E7 v4 ont de 4 à 24 coeurs de processeur chacun, selon les versions, et ils peuvent donc supporter jusqu'à 48 fils d'exécution (ou threads) au maximum. Ces processeurs possèdent une mémoire cache de type L3 de capacité mémoire allant jusqu'à 60 Mo, partagée entre les différents coeurs. Dans l'exemple représenté en figure 1, le module serveur comporte un ensemble de sockets 11 comportant deux processeurs 11₁ et 11₂. Mais les serveurs de la gamme Bullion peuvent comporter plus de processeurs, en l'occurrence jusqu'à seize processeurs pour les serveurs Bullion S16 qui possède seize sockets.

La gamme Bullion offre en effet quatre versions, à savoir le S2, le S4, le S8 et le S16, qui comprennent respectivement un, deux, quatre ou huit modules identiques, de taille 3U. Le cas échéant, les modules sont assemblés en colonne, selon une architecture modulaire, via un système de branchement sans câbles (technologie de connectique dite « *Connecting Box* » de BULL ATOS). Ils offrent des modèles de puissance allant de 2-Processeurs/48Go-RAM pour le Bullion S2 jusqu'à 16-Processeurs/24To-RAM pour le Bullion S16. Avec deux processeurs et jusqu'à 48 coeurs, le premier de la gamme, à savoir le Bullion S2 peut donc supporter jusqu'à supporter 96 fils d'exécution. Le dernier de la gamme, à savoir le Bullion S16, peut quant à lui supporter jusqu'à 768 fils d'exécution avec ses 16 processeurs offrant jusqu'à 384 coeurs au maximum.

La mémoire 12 comprend entre une et huit lames de mémoire (« *Memory Blades* », en anglais), et plus particulièrement huit lames 12₁ à 12₈ dans l'exemple représenté. Il s'agit par exemple de disques à semi-conducteur (ou SSD, de l'anglais « Solid State Drive »). Un SSD est un dispositif de stockage pour ordinateur similaire à un disque dur, mais beaucoup plus rapide et plus fiable notamment car il ne comprend aucune pièce en mouvement. Un SSD utilise une mémoire de type Flash, qui procure des temps de démarrage et de chargement quasi instantanés. Chaque lame de mémoire 12₁ à 12₈ peut avoir une capacité comprise en 48 Go et 384 Go, ce qui offre une capacité totale maximum de 3 To (téraoctet).

Pour la gestion de la machine, la plateforme matérielle 10 comporte en outre un contrôleur de management 13 (ou iBMC, de l'anglais « *Integrated Baseboard Management Controller* »). Cet iBMC permet à un opérateur de se connecter depuis un terminal 130 avec le statut de superadministrateur, via un bus tel que I2C, par exemple. L'opérateur se connecte en mode superadministrateur à la plateforme matérielle 10 directement, pour configurer les éléments matériels de cette plateforme matérielle. Cette configuration peut être réalisée, par exemple, suivant les spécifications du protocole IPMI (acronyme anglais de « *Intelligent Platform Management Interface* »), qui est une interface de gestion de matériel standardisée, fournie principalement sur les serveurs, indépendante du système d'exploitation, et conçue pour permettre de contrôler certains composants hardware et pour gérer/manager la machine, localement ou à distance. Dans un exemple de mise en oeuvre, le paramétrage du matériel peut être réalisé en usine, avant la livraison de la machine au client final, grâce à un logiciel de management tel que *Bull System Manager,* ou *Bull iCare,* ou encore *Bull Platform Manager.* On verra plus loin que, conformément à des modes de réalisation de l'invention, cette configuration préalable à l'utilisation de la machine comprendra notamment la création et l'affectation de pools de ressources matérielles.

La plateforme matérielle 10 comprend des cartes d'interface réseau comme les cartes 14 et 15, pour l'accès à un réseau de télécommunications propriétaire 141 et pour l'accès à des moyens périphériques 150 de stockage externe, respectivement.

Le réseau de télécommunications 141 est un réseau spécifique qui permet à des utilisateurs autorisés d'accéder à la machine via des appels au système d'exploitation propriétaire GCOS 7, via des terminaux 140, à travers un protocole propriétaire. Il s'agit dans exemple du protocole OSI /DSA (de l'anglais « Open Systems Interconnection / Distributed Standard Architecture »). DSA est le nom de l'implémentation sous forme de système distribué du modèle d'interconnexion des systèmes ouverts (ISO), qui est proposé spécifiquement par BULL ATOS.

La carte 15 est quant à elle une carte d'interface réseau (ou carte NIC, de l'anglais « *Network Interface Card* ») avec au moins un port Ethernet, par laquelle la machine a accès, via un réseau 151 sous protocole TCP / IP, à un système de sauvegarde 150 (ou backup) comprenant une librairie virtuelle (ou VTL, de l'anglais « *Virtual Tape Library* »). Le système 150 peut par exemple fonctionner à la fois en mode disque à disque (D2D) et en mode disque à disque à bande (D2D2T). Il s'agit par exemple de la solution *StoreWay Virtuo NV Series^{™}* de BULL ATOS, ci-après Virtuo par raccourci, qui est une solution unifiée pour virtualiser la fonction de sauvegarde sur de multiples environnements ouverts ou propriétaires dans les serveurs Mainframe. L'architecture de Virtuo comprend un moteur de duplication/réplication 154, et des disques de stockage 155 pouvant offrir plus de 1 Po (petaoctet) d'espace disque pour sauvegarder les données avec un débit de transfert des données de plus de 45 To/heure. La solution comprend également un ou plusieurs lecteurs de bandes 152 périphériques, par exemple de type LTO (de l'anglais « *Linear Tape-Open* »), comme un lecteur de type LTO6 ou de type plus récent. LTO désigne une technique de stockage sur bande magnétique au format ouvert, qui est le format le plus répandu sur le marché des bandes et lecteurs de bande de moyenne gamme.

En tant qu'outil de virtualisation, Virtuo permet d'assurer les fonctionnalités de réplication des données selon un schéma maître-esclave. Il permet d'assurer la cohérence des données afin d'améliorer la fiabilité, la tolérance aux pannes, et la disponibilité. Avantageusement Virtuo est une solution d'archivage sur une architecture comme une architecture de la société SAVE SOLUTIONS^{®} (i.e. du marché), par exemple, qui est compatible non seulement avec les systèmes d'exploitation propriétaires GCOS de BULL ATOS mais également avec le système d'exploitation propriétaire z/OS^{®} de IBM^{™}.

L'Homme du métier appréciera toutefois que, en variante, le système d'archivage peut être un système propriétaire. Dans un tel cas, il peut y être accédé par un réseau spécifique selon un protocole propriétaire, comme le réseau 141.

La plateforme matérielle 10 comprend encore un ou plusieurs contrôleurs de bus hôtes 16 (ou HBA, de l'anglais « *Host Bus Adapter* »), qui sont des cartes d'extension permettant de connecter le système hôte, via un bus externe, à un réseau de stockage externe. Il peut s'agir par exemple d'un réseau de stockage spécialisé 160, de type SAN (de l'anglais « *Storage Area Network* »). Un tel réseau de stockage comprend des ressources physiques de stockage, par exemple des disques 164 dans des baies de stockage. Ces ressources sont mutualisées et on y accède, par exemple via des fibres optiques, par un accès bas niveau qui a l'avantage d'être rapide et fiable. Pour y parvenir on peut utiliser le protocole FC (de l'anglais « *Fibre Channel* ») qui est un protocole défini par la norme ANSI X3T11, ou sa variante FCoE (de l'anglais « *Fibre Channel over Ethernet* ») lorsque les trames du protocole FC sont transmises sur un réseau Ethernet. Les contrôleurs de bus hôtes 16 sont alors des cartes FC. C'est un protocole série, qui n'a besoin que de deux conducteurs physiques. Il peut donc fonctionner non seulement sur de la fibre optique, mais aussi sur de la paire torsadée (i.e., du cuivre) ou du câble coaxial. Cette technologie permet d'atteindre des débits élevés, par exemple de l'ordre de 16 Gigabits/s. La topologie du réseau peut être, comme dans l'exemple représenté, une topologie commutée (on dit aussi « switchée »), comme dans l'exemple représenté où il s'agit d'une *fabric* 161 comprenant deux switches réseaux 162a et 162b et deux routeurs 163a et 163b.

La plateforme matérielle peut encore comprendre d'autres contrôleurs de périphériques, non représentés, comme un ou plusieurs contrôleurs USB pour la connexion d'une souris ou d'un disque dur externe, un ou plusieurs contrôleurs *Flash* pour réaliser des opérations d'entrée/sortie sur des cartes mémoire de cette technologie, etc.

On s'intéresse maintenant à la partie logicielle 20 de la machine. Elle est basée principalement sur le système d'exploitation propriétaire 22 du fabricant du serveur centralisé, à savoir GCOS 7 dans l'exemple considéré ici. La plateforme matérielle attendue par ce système d'exploitation est émulée par un simulateur logiciel 21 comme V7000, qu'on appelle aussi machine virtuelle V7000 VM. Cette machine virtuelle est montée par-dessus l'architecture matérielle 10 précédemment décrite. Ainsi, les programmes utilisateur 23 (ou programmes d'application, ou simplement applications) sont lancés sur le système d'exploitation propriétaire 22 lorsqu'il est exécuté sur l'architecture matérielle 10, laquelle est toutefois gérée par un système d'exploitation ouvert 24, notamment pour l'ordonnancement, la gestion de la mémoire et les entrées-sorties. Ceci permet d'utiliser une plateforme matérielle, qui est moins chère et qui bénéficie d'évolutions plus fréquentes, telle qu'une plateforme matérielle du marché.

Le système d'exploitation ouvert 24 est par exemple Windows^{™} W2012R2^{®} ou une version plus récente comme Windows Server 2016^{®}. On notera, toutefois, que l'invention ne se limite pas à ces exemples, et peut notamment s'appliquer à d'autres systèmes d'exploitation ouverts, comme Linux^{®} ou des systèmes d'exploitation qui en sont dérivés. En outre, il est possible que la machine supporte plus d'un système d'exploitation ouvert afin de permettre à des programmes utilisateur divers et variés d'être exécutés sur des machines virtuelles respectives, selon les besoins spécifiques à chaque mise en oeuvre.

Ainsi, V7000 est un logiciel fourni par BULL pour gérer l'environnement GCOS 7 sur la plateforme IA commandée par un système d'exploitation ouvert de type Microsoft^{™} Windows^{®}. La fonction de cet élément logiciel 21 est d'émuler une ou plusieurs instances de GCOS 7 sur la plateforme IA afin que les applications 23 (i.e., les programmes utilisateur du client) qui ont été conçues de longue date pour le système d'exploitation propriétaire 22 (et pour certaines à l'époque des serveurs 100% propriétaires DPS 7000), demeurent exécutables en l'état sur la plateforme IA.

A cet effet, en particulier, le jeu d'instructions natif du DPS 7000 défini par ce qu'on appelle le « décor intérieur », est conservé dans la machine virtuelle V7000 VM grâce à un micrologiciel qui est associé à un micro-noyau 210 avec un interpréteur de commandes spécifique. Ceci offre aux applications 23 une visibilité logicielle invariante par rapport aux machines antérieures qui étaient 100% propriétaires. Les processeurs virtualisés 210 de la machine virtuelle 21 (ou « *thread processors* » en anglais) sont associés un pour un avec les coeurs des processeurs physiques 11₁, 11₂, ... de la plateforme 10.

Le rôle des modules d'entrée/sortie 211 (IOP, de l'anglais « Input/Output Processors ») de la machine virtuelle V7000 est de supporter les entrées/sorties en prenant en charge les programmes canaux générés par GCOS 7 pour les transformer en entrées-sorties mettant en oeuvre les pilotes de cartes et de périphériques commandés sous le système d'exploitation ouvert Windows. A cet effet, les modules 211 s'exécutent sur Windows et interfacent avec l'interpréteur de commandes de la machine virtuelle V7000 VM. De même, la machine virtuelle V7000 VM comprend un composant logiciel 212 (VCP7) s'exécutant également sur Windows, pour reproduire le fonctionnement des serveurs de télécommunications qui supportent les divers protocoles propriétaires (dont OSI / DSA).

Pour l'administration, la machine virtuelle V7000 VM comprend des modules logiciels 213 (modules SAM, de l'anglais « *System Administration* & *Management* »), qui s'exécutent également sous Windows et assurent l'administration de GCOS 7, de V7000, de VCP7 et des modules d'interopérabilité 25 et 26 (voir plus loin) suivant un modèle client-serveur. Plus particulièrement, c'est la partie serveur qui s'exécute sur la machine virtuelle V7000 VM en tant que service Windows.

La machine virtuelle V7000 VM comprend encore un module de service 214 dédié au serveur d'administration V7000 (VAS, de l'anglais « *V7000 Administration Server* ») et un module de service 215 dédié à la commande du système (SYC, mis pour « *System Control* »). Ces modules 214 et 215 fonctionnent aussi suivant le modèle client-serveur.

L'ordinateur central représenté à la Figure 1 comprend enfin deux modules d'interopérabilité 25 et 26, qui ont pour particularité de s'exécuter directement sur le système d'exploitation ouvert 24. Ce nombre n'est qu'un exemple, puisque d'autres modules d'interopérabilité similaires peuvent être prévus selon les besoins de la mise en oeuvre. Il peut également n'y en avoir qu'un seul.

Le module d'interopérabilité 25 et 26 s'exécutent sur Windows et permettent d'accéder à des applications du monde ouvert, depuis des applications GCOS 7. Le premier module 25 est une par exemple passerelle INTEROP 7 (ou « *INTEROP 7 Gateway* »), qui permet, par exemple, d'accéder à un server SQL externe depuis GCOS 7, en faisant des requêtes SQL via un réseau 251 qui peut être un réseau TCP/IP.

Le module 26 permet d'accéder à des bases de données distantes, ou à des applications du monde ouvert validées par le fabricant. Pour assurer ces différents accès en parfaites conditions d'interopérabilité, il y a un mécanisme de liaison à haute vitesse (ou HSL, de l'anglais « *High Speed Link* ») utilisant une zone de mémoire partagée entre GCOS 7 et Windows. Cette zone permet d'échanger des données, faire des rebonds vers des applications distantes, pour véhiculer des données via un protocole IP des requêtes et des données, et faire des transferts de fichiers via FTP depuis des applications GCOS 7 vers des machines distantes sous Linux^{®}, sous Windows@ ou sous AIX^{®} (AIX^{®} est une marque déposée de IBM Corporation^{™}). Ce mécanisme est décrit en détail dans la demande de brevet FR-A 2 284 008, à laquelle le lecteur pourra se référer en tant que de besoin.

En référence au schéma fonctionnel de la **Figure 2****,** on va maintenant décrire des modes de réalisation de l'invention. Comme il est montré sur cette figure, l'ordinateur central selon des modes de réalisation se distingue de celui de la Figure 1 en ce qu'il comprend un logiciel hyperviseur de virtualisation 300, qui est un hyperviseur de virtualisation (e.g. hyperviseur de virtualisation du marché). Dit autrement, il n'est pas spécifique à l'invention. Dans un exemple non limitatif, il peut s'agir d'un logiciel de la gamme VMware, par exemple VMWare^{™} vSphere^{®} ESXi. Mais cela peut également être n'importe quel autre hyperviseur de virtualisation équivalent (e.g. hyperviseur de virtualisation du marché).

Un environnement logiciel Mainframe propriétaire 1 est constitué d'un ensemble de logiciels composé d'un simulateur propriétaire 101, d'un système d'exploitation propriétaire 102, s'exécutant sur le simulateur propriétaire 101, de plusieurs composants d'interopérabilité 105 et 106 entre le système d'exploitation propriétaire 102 et les systèmes ouverts et bases de données avec qui il peut communiquer et interagir. Cet environnement inclut également un système d'exploitation ouvert 104 de type *Microsoft Windows Server*^{®} ou *Linux*^{®} sur lequel s'exécute le simulateur propriétaire 101, le système d'exploitation propriétaire 102 (à travers le simulateur propriétaire 101) et les composants d'interopérabilité 105 et 106. L'environnement Mainframe logiciel complet, incluant le simulateur propriétaire 101, le système d'exploitation propriétaire 102, les composants d'interopérabilité 105 et 106 ainsi que le système d'exploitation ouvert 104, s'exécute sur un serveur physique basé sur une architecture matérielle 100 contemporaine de type Architecture Intel^{®} (IA).

Par souci de simplicité, on se contentera ici de renvoyer le lecteur à la description donnée ci-avant de l'environnement logiciel 20 de l'ordinateur central de la Figure 1. En effet, les identités fonctionnelles suivantes peuvent être mentionnées :
- le système d'exploitation propriétaire 102 de l'environnement 1 de la Figure 2 correspond au système d'exploitation 22 de la Figure 1 (à savoir GCOS 7 dans l'exemple) ;
- les applications 103 de l'environnement 1 de la Figure 2 correspondent aux applications 23 de la Figure 1 ;
- le système d'exploitation ouvert 104 de l'environnement 1 de la Figure 2 correspond au système d'exploitation 24 de la Figure 1, à savoir Windows Server 2016^{®} dans l'exemple ; et,
- les composants d'interopérabilité 105 et 106 de l'environnement 1 de la Figure 2 correspondent aux composants d'interopérabilité 25 et 26 de la Figure 1.

Du point de vue logiciel, la seule différence est que la machine virtuelle V7000 VM s'exécute intégralement et uniquement sur le système d'exploitation ouvert 104, à savoir Windows^{™}, dans une machine virtuelle Mainframe qui est commandée par l'hyperviseur de virtualisation 300, pour son exécution sur la plateforme matérielle 10. Dit autrement, le simulateur propriétaire 101 et le système d'exploitation propriétaire 102 s'exécutent sur un système d'exploitation ouvert 104, dans un environnement logiciel virtualisé qui s'exécute sur la plateforme matérielle 10 sous la commande du logiciel hyperviseur de virtualisation 300. Ainsi, les applications 103 s'exécutent de manière transparente sur les processeurs physiques de la plateforme matérielle 100.

La machine virtuelle Mainframe précitée est ici un environnement logiciel Mainframe propriétaire déployé dans une machine virtuelle gérée par un hyperviseur standard(e.g. hyperviseur de virtualisation du marché). Elle correspond à une sorte de container définissant l'enveloppe matérielle de la machine avec un système d'exploitation propriétaire embarqué dans le container, capable d'utiliser les ressources matérielles mises à sa disposition.

Conformément à des modes de mise en oeuvre de l'invention, les ressources matérielles de la plateforme matérielle comprennent un premier pool 100 de ressources matérielles qui est configuré, par un paramétrage *ad hoc* de l'hyperviseur de virtualisation 300 pour l'hébergement, exclusivement, de la première machine virtuelle Mainframe (c'est-à-dire de la machine virtuelle gérée par l'hyperviseur 300 dans laquelle l'environnement logiciel Mainframe propriétaire s'exécute). La constitution de ce pool de ressources dédiées, qu'on peut aussi appeler « pool propriétaire », restaure la capacité d'assurer la sécurité et le niveau de performance qui sont propres aux applications Mainframe. Avantageusement, ce premier pool 100 de ressources matérielles comporte des ressources matérielles provenant d'au moins deux serveurs physiques indépendants. Ainsi, la plateforme matérielle 10 au sens de l'invention peut comporter plusieurs serveurs physiques indépendants.

En effet, le niveau de puissance de traitement (associée aux processeurs) disponible pour la (ou les) machine(s) virtuelle(s) Mainframe est garanti du fait de la gestion des paramètres de l'hyperviseur de virtualisation VMware^{™} vSphere^{®}. Ainsi le temps de réponse considéré du point de vue des applications est à peu près constant. En outre, on peut aussi mettre à profit les paramètres de l'hyperviseur de virtualisation VMware de manière à exécuter les applications GCOS 7 sur les processeurs physiques du pool dédié 100 sans redonner la main ni à Windows Server 2016^{®} ni à l'hyperviseur VMware^{™} vSphere^{®}.

La définition du pool de ressources de la plate-forme matérielle qui est dédiée à l'hébergement de la (ou des) machine(s) virtuelle(s) Mainframe, i.e., l'allocation des ressources matérielles dédiées à l'environnement Mainframe, dépend du modèle de performances visé en termes de puissance de traitement et de ressource mémoire, et eu égard au nombre maximum d'instances de machines virtuelles Mainframes prévues dans le cahier des charges. Avantageusement, le Mainframe peut fournir une gamme de modèles de puissance (i.e., une puissance de traitement combinée à une certaine capacité mémoire) couvrant une plage allant d'un poids de valeur minimum jusqu'à un poids de valeur maximum. Comme l'Homme du métier ne l'ignore pas, la notion de poids n'a de sens que dans l'environnement du Mainframe puisqu'il représente une puissance du processeur propriétaire garantie.

Dans des mises en oeuvre de l'ordinateur central, plusieurs instances du système d'exploitation propriétaire GCOS 7 peuvent être simultanément exécutées sur des machines virtuelles Mainframe respectives, qui s'exécutent toutes sur l'hyperviseur de virtualisation, au moyen des ressources matérielles dédiées au Mainframe propriétaire qui appartiennent au pool de ressources 100.

Dans l'exemple montré à la Figure 2, il y a ainsi non seulement l'environnement Mainframe 1 décrit plus haut, mais également un autre environnement Mainframe 2 qui s'exécute simultanément et concurremment sur la plateforme matérielle 10. Cet environnement Mainframe 2 est identique à l'environnement Mainframe 1 déjà décrit, et n'est donc pas décrit en détails ici. Avantageusement, les différentes instances associées à cette pluralité d'environnements Mainframe (e.g. GCOS 7) sont toutes virtualisées sous la commande de l'hyperviseur de virtualisation 300. C'est donc à son niveau que sont appelées les ressources matérielles (processeurs physique et mémoire) nécessaires. C'est une solution simple pour faire tourner simultanément plusieurs instances de GCOS 7, l'attribution des ressources ne procédant que du paramétrage de l'hyperviseur 300 (voir plus bas).

En variante ou en complément, une ou plusieurs instances d'un système d'exploitation ouvert (« *open OS* » en anglais) peuvent être simultanément exécutées sur des machines virtuelles respectives, qui s'exécutent toutes sur l'hyperviseur de virtualisation 300, au moyen d'autres ressources matérielles qui sont dédiées aux applications du monde ouvert. Ces autres ressources peuvent être organisées sous la forme d'un pool 200 de ressources distinctes et isolées des ressources du pool 100.

Dans l'exemple représenté à la Figure 2, il y a ainsi un environnement logiciel ouvert 3 comprenant une instance 31 du système d'exploitation Microsoft^{™} Windows^{®} (par exemple Windows 2016 Server^{®}), qui s'exécute sur le pool de ressources 200, et sur laquelle tournent des applications 32 du monde ouvert. De même, il y a également un environnement logiciel ouvert 4 comprenant une instance 41 du système d'exploitation Linux^{®}, sur laquelle tournent des applications 42 du monde ouvert.

Ainsi, l'ordinateur central selon des modes de réalisations peut supporter des applications du monde ouvert, ce qui permet au client d'utiliser des programmes du marché ou à tout le moins qui n'ont pas besoin d'avoir été conçus par des spécialistes du système d'exploitation propriétaire GCOS 7. Cela permet de réduite le coût de déploiement de fonctionnalités supplémentaires, à mesure que de telles fonctionnalités apparaissent dans le monde ouvert. Egalement, l'ordinateur central peut s'interfacer avec des ressources externes, distantes ou non, éventuellement via un réseau de télécommunications étendu, comme des bases de données auxquelles le client a accès. Cela permet aussi de fournir plus de possibilités d'interopérabilité avec une gamme étendue de périphériques. D'une façon générale, l'invention permet à l'ordinateur central d'accéder à des ressources ou à des périphériques du monde ouvert plus nombreux, et à moindre coût, et notamment à des ressources du « monde Linux », dans un ordinateur central qui fonctionne, du point de vue des programmes utilisateurs 103, sous le système d'exploitation propriétaire GCOS 7.

La réservation des ressources à travers la constitution et l'affectation des pools de ressources 100 et 200 relève d'une configuration de l'hyperviseur de virtualisation 300 qui est de la compétence d'un superadministrateur. Cette configuration peut se faire en usine chez le fabricant, *i.e.,* avant la livraison de l'ordinateur central au client, via un terminal tel que le terminal 130 déjà décrit en référence au schéma de la Figure 1. Ce terminal 130 peut être connecté à la machine via le contrôleur de management 13 (iBMC) déjà décrit. Un opérateur ayant le statut d'administrateur chez le client (on dit aussi un « administrateur GCOS 7 »), quant à lui, peut arrêter et démarrer des machines virtuelles GCOS 7 comme les instances 1 et 2, en fonction des besoins propres à l'utilisation. Mais il ne peut pas modifier le paramétrage de l'hyperviseur en ce qui concerne la définition des pools de ressources 100 et 200, afin de ne pas affecter le niveau de sécurité et de performance garanti par le fabricant.

La configuration du pool 100 de ressources matérielles dédié à l'environnement logiciel Mainframe propriétaire est telle qu'on peut garantir une quantité de ressources offerte à GCOS 7 qui est suffisante quelle que soit la charge de l'hyperviseur occasionnée par les machines virtuelles applicatives telles que les machines virtuelles 3 et 4. Dit autrement, la sécurité, la performance et la disponibilité de l'environnement Mainframe peuvent être considérées comme équivalentes à celles des ordinateurs centraux existants, et ce, quel que soit le nombre de machines virtuelles applicatives susceptibles d'exécuter des instances d'un système d'exploitation ouvert (nombre qui est d'ailleurs non déterminé lors de la fabrication et du paramétrage du serveur, et n'est pas forcément maîtrisé lors de l'utilisation).

A l'inverse, le nombre maximum d'instances de machines virtuelles de l'environnement logiciel Mainframe propriétaire qui peuvent potentiellement s'exécuter concurremment sur la plateforme matérielle, et leurs modèles de performances respectifs, sont connus au moment du paramétrage de l'ordinateur central en usine, puisque cela fait partie du cahier des charges à respecter par le fabricant. C'est pourquoi le pool 100 de ressources matérielles dédiées à l'environnement Mainframe peut être dimensionné de manière telle que toutes les instances prévues (comme les instances 1 et 2) pourront être hébergées dans le pool 100 de ressources matérielles de la plateforme matérielle 10, en garantissant leurs niveaux de performances respectifs. Ceci ne change pas par rapport au dimensionnement des ordinateurs centraux existants.

On notera que l'affectation de pools de ressources matérielles (puissance CPU et capacité mémoire) est une fonctionnalité native des hyperviseurs de virtualisation VMware. L'Homme du métier appréciera que c'est toutefois un paradoxe de l'utiliser, conformément aux modes de réalisation de l'invention, pour faire tourner des instances d'un système d'exploitation propriétaire qui sont soumises à de fortes contraintes de sécurité, de performance et de disponibilité. Il apparaît en effet contre-nature d'utiliser la virtualisation dont la finalité est, au contraire des considérations habituelles dans un ordinateur central, de partager et mutualiser les ressources matérielles entre toutes les machines virtuelles en misant sur la souplesse et la tolérance opérationnelles des machines virtuelles. Ce paradoxe est surmonté, selon les modes de réalisation, grâce à la constitution du pool de ressources matérielles dédiées à l'exécution des différentes instances prévues de l'environnement logiciel Mainframe propriétaire.

La sécurité provient également de la vérification, au moment du démarrage d'une machine virtuelle sur le pool 100 des ressources qui sont dédiées exclusivement aux applications tournant sur le système d'exploitation propriétaire 102, qu'elle s'exécute bien sur la plateforme matérielle d'une machine propriétaire. Ceci vise à protéger contre la duplication des machines virtuelles GCOS 7 sur d'autres machines que celle(s) qui a (ont) été prévue(s) au départ, lors de la livraison du serveur Mainframe au client. Par machine(s) propriétaire(s), on entend ici les différents modules de serveurs combinés dans l'équipement qui est fourni au client par le fabricant de l'ordinateur central.

Actuellement, ce qui peut être offert grâce à la seconde phase de virtualisation selon des modes de mise en oeuvre de l'invention, ce sont des serveurs avec quatre sockets, donc avec deux modules comme celui présenté ci-dessus en référence au schéma de la Figure 1.

Mais l'architecture selon l'invention permet de proposer des serveurs avec un ou plusieurs modules de serveur comme il a été décrit ci-dessus en référence au schéma de la Figure 1. Chaque module possède deux sockets, et peut donc intégrer deux processeurs 32-bits Intel^{®} Xeon^{®}, par exemple. Les serveurs peuvent avoir deux, quatre, huit ou seize sockets, voire plus, en fonction du nombre de modules livrés avec le serveur, respectivement un, deux, quatre ou huit modules. Dit autrement, dans les ordinateurs centraux de BULL ATOS de la gamme Bullion, il peut y avoir de deux à seize processeurs, à raison de deux processeurs par module de serveur équipé chacun de deux sockets accueillants les processeurs. Au niveau encombrement, chaque module de serveur est un module de taille 3U.

Avantageusement, la mise en oeuvre de l'invention ne fait pas obstacle à la migration d'une instance de l'environnement logiciel Mainframe propriétaire, *i.e.,* d'instance GCOS 7 dans l'exemple considéré ici, d'un serveur sur laquelle elle a été ouverte vers un autre serveur. Il suffit de faire migrer la machine virtuelle correspondante, ce qui ne pose aucune difficulté à l'Homme du métier au niveau de l'administration de l'hyperviseur de virtualisation 300.

En d'autres termes, dans des modes de réalisation, le logiciel hyperviseur de virtualisation peut être configuré pour permettre la migration d'une instance de l'environnement logiciel Mainframe propriétaire, depuis un premier serveur vers un second serveur ayant chacun des ressources matérielles qui participent au pool Mainframe 100 de ressources matérielles dédiées à l'environnement Mainframe. Ceci permet de satisfaire les contraintes de haute disponibilité (en anglais HA High Availability) de l'environnement logiciel Mainframe propriétaire (instance Mainframe GCOS 7). Cela est par exemple possible grâce à la migration de la première machine virtuelle (hébergeant l'instance Mainframe GCOS 7) localisée sur un serveur physique, vers un autre serveur physique. Ceci peut se faire à chaud, c'est-à-dire sans arrêt de l'instance de l'environnement logiciel Mainframe propriétaire. Ceci est donc complètement invisible de l'utilisateur final connecté à l'instance de l'environnement logiciel Mainframe (e.g. Mainframe GCOS7). Ainsi, un serveur physique peut être complètement arrêté pour maintenance par exemple, sans arrêt de la disponibilité du mainframe GCOS7.

Pour les télécommunications, on reporte un réseau de télécommunications propriétaire comme le réseau 141 de la Figure 1, qui est un réseau spécifique, sur l'hyperviseur de virtualisation 300. L'Homme du métier appréciera que ceci ne pose aucune difficulté avec un hyperviseur de la gamme VMware, notamment, qui est fondamentalement basée sur le protocole IP des réseaux Ethernet. Ainsi, dans des modes de réalisation, les utilisateurs GCOS 7 peuvent continuer à accéder à la machine, via des terminaux de réseaux. Il peut s'agir de terminaux spécifiques comme le terminal 140 de la Figure 1, à travers un protocole propriétaire comme le protocole OSI / DSA, déjà présenté *supra* en référence à la Figure 1, qui est proposé spécifiquement par BULL ATOS. Dit autrement, les modes de mise en oeuvre de l'invention n'appellent pas de modifications particulières au niveau de la gestion du (ou des) réseau(x) de télécommunications qui est (sont) associé(s) à l'ordinateur central.

Les mêmes remarques s'appliquent le cas échéant à propos de l'utilisation d'un système de sauvegarde et notamment de l'accès aux lecteurs de bandes, et à propos en outre d'un réseau de stockage spécialisé de type SAN, comme le système 150 et le réseau 160 qui ont été précédemment décrits en référence au diagramme fonctionnel de la Figure 1. Il est considéré que leur gestion dans des ordinateurs centraux mettant en oeuvre l'invention ne pose aucune difficulté particulière à l'Homme du métier, qui sait configurer l'hyperviseur de virtualisation 300 pour assurer l'interface avec ces périphériques.

Autrement dit, dans des modes de mise en oeuvre, l'hyperviseur de virtualisation 300 est configuré pour permettre l'accès par les instances 1 et 2 de l'environnement logiciel Mainframe propriétaire à un système de sauvegarde externe 150 (Figure 1) et/ou à un réseau de stockage spécialisé 160 (Figure 1).

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en oeuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Ordinateur central comportant :
- une plateforme matérielle (10) avec des ressources matérielles comprenant des processeurs et de la mémoire ;
- un logiciel hyperviseur de virtualisation (300) ;
- un environnement logiciel Mainframe propriétaire dont au moins une instance (1) est apte à s'exécuter sur l'architecture matérielle, dans au moins une première machine virtuelle pouvant s'exécuter sur l'hyperviseur de virtualisation, l'environnement logiciel Mainframe propriétaire comportant :
- un logiciel simulateur propriétaire (101) ;
- un système d'exploitation propriétaire (102) apte à s'exécuter sur le logiciel simulateur propriétaire, et chargé d'assurer la liaison entre les ressources matérielles du premier pool de ressources matérielles à travers le logiciel simulateur propriétaire, d'une part, et des applications (103) conçues pour s'exécuter sur ledit système d'exploitation propriétaire, d'autre part, lorsque lesdites applications sont exécutées ; ainsi que,
- un système d'exploitation ouvert (104), sur lequel peuvent s'exécuter le simulateur propriétaire et le système d'exploitation propriétaire ;
dans lequel :
l'hyperviseur de virtualisation est configuré de manière à créer un premier pool (100) de ressources matérielles de la plateforme matérielle qui est dédié à l'hébergement, exclusivement, de la au moins une première machine virtuelle dans laquelle l'instance de l'environnement logiciel Mainframe propriétaire peut s'exécuter.

2. Ordinateur central selon la revendication 1, dans lequel l'instance de l'environnement logiciel Mainframe propriétaire comprend en outre un ou plusieurs composants d'interopérabilité (105,106) entre le système d'exploitation propriétaire et des systèmes ouverts et des bases de données externes avec lesquels il peut communiquer et interagir, lesdits composants d'interopérabilité pouvant s'exécuter sur le système d'exploitation ouvert.

3. Ordinateur central selon l'une quelconque des revendications 1 à 2, dans lequel le logiciel hyperviseur de virtualisation est capable de faire tourner plusieurs instances (1,2) de l'environnement logiciel Mainframe propriétaire, avec des modèles de performances respectifs, dans des machines virtuelles respectives pouvant s'exécuter concurremment sur la plateforme matérielle en étant toutes hébergées dans le premier pool de ressources matérielles de la plateforme matérielle.

4. Ordinateur central selon l'une quelconque des revendications 1 à 3, comprenant en outre :
- un environnement logiciel ouvert dont au moins une instance (3,4) est apte à s'exécuter concurremment sur la plateforme matérielle, dans au moins une seconde machine virtuelle pouvant s'exécuter sur le logiciel hyperviseur de virtualisation,
- et dans lequel :
- les ressources matérielles de la plateforme matérielle comprennent un second pool de ressources matérielles (200) créé par configuration de l'hyperviseur de virtualisation, pour l'hébergement, exclusivement, de la au moins une seconde machine virtuelle ; et,
- l'environnement logiciel ouvert comprend un système d'exploitation ouvert (31,41) chargé d'assurer la liaison entre les ressources matérielles du second pool de ressources matérielles, d'une part, et des applications du monde ouvert (32,42) conçues pour s'exécuter sur ledit système d'exploitation ouvert, d'autre part, lorsque lesdites applications sont exécutées.

5. Ordinateur central selon la revendication 4, dans lequel le logiciel hyperviseur de virtualisation est capable de faire tourner plusieurs instances (3,4) de machines virtuelles de l'environnement logiciel ouvert pouvant s'exécuter concurremment sur la plateforme matérielle, en étant toutes hébergées dans le second pool de ressources matérielles de la plateforme matérielle.

6. Ordinateur central selon l'une quelconque des revendications précédentes, dans lequel le logiciel hyperviseur de virtualisation est configuré pour permettre la migration d'une instance de l'environnement logiciel Mainframe propriétaire, depuis un premier serveur vers un second serveur ayant chacun des ressources matérielles participant au premier pool de ressources matérielles, de manière à satisfaire des contraintes de disponibilité de l'ordinateur central.

7. Ordinateur central selon l'une quelconque des revendications précédentes, dans lequel l'hyperviseur de virtualisation est configuré pour permettre l'accès par les instances de l'environnement logiciel Mainframe propriétaire à un système de sauvegarde externe (150) et/ou à un réseau de stockage spécialisé (160).

8. Procédé de configuration d'un ordinateur central pour obtenir un ordinateur central ayant un environnement logiciel Mainframe propriétaire virtualisé, ledit ordinateur comportant une plateforme matérielle (10) avec des ressources matérielles comprenant des processeurs et de la mémoire, le procédé comprenant les étapes suivantes :
- installation d'un logiciel hyperviseur de virtualisation (300) ;
- installation d'un système d'exploitation ouvert (104) ;
- installation d'un environnement logiciel Mainframe propriétaire, comportant un logiciel simulateur propriétaire (101) et un système d'exploitation propriétaire (102), dont au moins une instance (1) est apte à s'exécuter sur l'architecture matérielle, dans au moins une première machine virtuelle pouvant s'exécuter sur l'hyperviseur de virtualisation, l'installation d'un environnement logiciel Mainframe comportant les sous-étapes suivantes :
- l'installation du logiciel simulateur propriétaire (101) de manière qu'il puisse s'exécuter sur le système d'exploitation ouvert ;
- l'installation du système d'exploitation propriétaire (102) de manière qu'il puisse s'exécuter sur le logiciel simulateur propriétaire, afin d'assurer la liaison entre les ressources matérielles du premier pool de ressources matérielles à travers le logiciel simulateur propriétaire, d'une part, et des applications (103) conçues pour s'exécuter sur ledit système d'exploitation propriétaire, d'autre part, lorsque lesdites applications sont exécutées alors que le simulateur propriétaire et le système d'exploitation propriétaire s'exécutent sur le système d'exploitation ouvert (104) ; et,
- configuration de l'hyperviseur de virtualisation de manière à créer un premier pool (100) de ressources matérielles de la plateforme matérielle qui est dédié à l'hébergement, exclusivement, de la au moins une première machine virtuelle dans laquelle l'instance de l'environnement logiciel Mainframe propriétaire peut s'exécuter.

## Patentansprüche

1. Großrechner, umfassend:
- eine Hardware-Plattform (10) mit Hardware-Ressourcen, die Prozessoren und Speicher umfassen,
- eine Virtualisierungs-Hypervisor-Software (300);
- eine proprietäre Mainframe-Software-Umgebung, von der mindestens eine Instanz (1) dazu geeignet ist, auf der Hardware-Architektur in mindestens einer ersten virtuellen Maschine ausgeführt zu werden, die auf dem Virtualisierungs-Hypervisor ausgeführt werden kann, wobei die proprietäre Mainframe-Software-Umgebung umfasst:
- eine proprietäre Simulator-Software (101);
- ein proprietäres Betriebssystem (102), das dazu geeignet ist, auf der proprietären Simulator-Software ausgeführt zu werden, und das verantwortlich ist, die Verbindung zwischen den Hardware-Ressourcen des ersten Hardware-Ressourcenpools durch die proprietäre Simulator-Software einerseits und Anwendungen (103), die dazu ausgelegt sind, auf dem proprietären Betriebssystem ausgeführt zu werden, andererseits sicherzustellen, wenn die Anwendungen ausgeführt werden; sowie
- ein offenes Betriebssystem (104), auf dem der proprietäre Simulator und das proprietäre Betriebssystem ausgeführt werden können;
wobei:
der Virtualisierungs-Hypervisor so konfiguriert ist, um einen ersten Pool (100) von Hardware-Ressourcen der Hardware-Plattform zu erstellen, der ausschließlich zum Hosting der mindestens einen ersten virtuellen Maschine bestimmt ist, in der die Instanz der proprietären Mainframe-Software-Umgebung ausgeführt werden kann.

2. Großrechner nach Anspruch 1, wobei die Instanz der proprietären Mainframe-Software-Umgebung zusätzlich eine oder mehrere Interoperabilitätskomponenten (105, 106) zwischen dem proprietären Betriebssystem und offenen Systemen und externen Datenbanken, mit denen es kommunizieren und interagieren kann, umfasst, wobei die Interoperabilitätskomponenten auf dem offenen Betriebssystem ausgeführt werden können.

3. Großrechner nach einem beliebigen der Ansprüche 1 bis 2, wobei die Virtualisierungs-Hypervisor-Software in der Lage ist, mehrere Instanzen (1, 2) der proprietären Mainframe-Software-Umgebung mit jeweiligen Leistungsmodellen in jeweiligen virtuellen Maschinen laufen zu lassen, die gleichzeitig auf der Hardware-Plattform ausgeführt werden können, indem sie alle im ersten Hardware-Ressourcenpool der Hardware-Plattform gehostet werden.

4. Großrechner nach einem beliebigen der Ansprüche 1 bis 3, ferner umfassend:
- eine offene Software-Umgebung, von der mindestens eine Instanz (3, 4) dazu geeignet ist, gleichzeitig auf der Hardware-Plattform in mindestens einer zweiten virtuellen Maschine ausgeführt zu werden, die auf der Virtualisierungs-Hypervisor-Software ausgeführt werden kann,
- und wobei:
- die Hardware-Ressourcen der Hardware-Plattform einen zweiten Hardware-Ressourcenpool (200) umfassen, der durch Konfiguration des Virtualisierungs-Hypervisors ausschließlich für das Hosting der mindestens einen zweiten virtuellen Maschine erstellt wird; und
- die offene Software-Umgebung ein offenes Betriebssystem (31, 41) umfasst, das verantwortlich ist, einerseits die Verbindung zwischen den Hardware-Ressourcen des zweiten Hardware-Ressourcenpools und andererseits Anwendungen der Open World (32, 42), die dazu ausgelegt sind, auf dem Betriebssystem ausgeführt zu werden, sicherzustellen, wenn die Anwendungen ausgeführt werden.

5. Großrechner nach Anspruch 4, wobei die Virtualisierungs-Hypervisor-Software in der Lage ist, mehrere Instanzen (3, 4) von virtuellen Maschinen der offenen Software-Umgebung laufen zu lassen, die gleichzeitig auf der Hardware-Plattform ausgeführt werden können, indem sie alle im zweiten Hardware-Ressourcenpool der Hardware-Plattform gehostet werden.

6. Großrechner nach einem beliebigen der vorstehenden Ansprüche, wobei die Virtualisierungs-Hypervisor-Software konfiguriert ist, um die Migration einer Instanz der proprietären Mainframe-Software-Umgebung von einem ersten Server zu einem zweiten Server zu ermöglichen, die jeweils Hardware-Ressourcen aufweisen, die an dem ersten Hardware-Ressourcenpool teilnehmen, um Verfügbarkeitsbeschränkungen des Großrechners zu erfüllen.

7. Großrechner nach einem beliebigen der vorstehenden Ansprüche, wobei der Virtualisierungs-Hypervisor konfiguriert ist, um Instanzen der proprietären Mainframe-Software-Umgebung den Zugriff auf ein externes Backup-System (150) und/oder ein spezialisiertes Speichernetzwerk (160) zu ermöglichen.

8. Verfahren zum Konfigurieren eines Großrechners, um einen Großrechner mit einer virtualisierten, proprietären Mainframe-Software-Umgebung zu erhalten, wobei der Rechner eine Hardware-Plattform (10) mit Hardware-Ressourcen umfasst, die Prozessoren und Speicher umfassen, wobei das Verfahren die folgenden Schritte umfasst:
- Installation einer Virtualisierungs-Hypervisor-Software (300);
- Installation eines offenen Betriebssystems (104);
- Installation einer proprietären Mainframe-Software-Umgebung, die eine proprietäre Simulator-Software (101) und ein proprietäres Betriebssystem (102) umfasst, von denen mindestens eine Instanz (1) dazu geeignet ist, auf der Hardwarearchitektur ausgeführt zu werden, in mindestens einer ersten virtuellen Maschine, die auf dem Virtualisierungs-Hypervisor ausgeführt werden kann, wobei die Installation einer Mainframe-Software-Umgebung die folgenden Teilschritte umfasst:
- die Installation der proprietären Simulator-Software (101), sodass sie auf dem offenen Betriebssystem ausgeführt werden kann;
- die Installation des proprietären Betriebssystems (102), sodass es auf der proprietären Simulator-Software ausgeführt werden kann, um einerseits die Verbindung zwischen den Hardware-Ressourcen des ersten Hardware-Ressourcenpools durch die proprietäre Simulator-Software und andererseits Anwendungen (103), die zur Ausführung auf dem proprietären Betriebssystem ausgelegt sind, sicherzustellen, wenn die Anwendungen ausgeführt werden, während der proprietäre Simulator und das proprietäre Betriebssystem auf dem offenen Betriebssystem (104) ausgeführt werden; und
- Konfigurieren des Virtualisierungs-Hypervisors, um einen ersten Hardware-Ressourcenpool (100) der Hardware-Plattform zu erstellen, der ausschließlich zum Hosting der mindestens einen ersten virtuellen Maschine bestimmt ist, in der die Instanz der proprietären Mainframe-Software-Umgebung ausgeführt werden kann.

## Claims

1. A mainframe computer comprising:
- a hardware platform (10) with hardware resources including processors and memory;
- a virtualization hypervisor software (300);
- a proprietary mainframe software environment of which at least one instance (1) is suitable for running on the hardware architecture, in at least one first virtual machine that is able to run on the virtualization hypervisor, the proprietary mainframe software environment comprising:
- a proprietary simulator software (101);
- a proprietary operating system (102) that is suitable for running on the proprietary simulator software, and is responsible for connecting the hardware resources of the first pool of hardware resources through the proprietary simulator software, on one hand, and applications (103) configured to run on said proprietary operating system, on the other hand, when said applications are running; and
- an open operating system (104) on which the proprietary simulator and the proprietary operating system can run;
wherein:
the virtualization hypervisor is configured to create a first pool (100) of hardware resources of the hardware platform that is dedicated to hosting, exclusively, the at least one first virtual machine in which the instance of the proprietary mainframe software environment can run.

2. The mainframe computer according to claim 1, wherein the instance of the proprietary mainframe software environment further includes one or more components (105, 106) for interoperability between the proprietary operating system and open systems and external databases with which it can communicate and interact, said interoperability components being able to run on the open operating system.

3. The mainframe computer according to either claim 1 or claim 2, wherein the virtualization hypervisor software is capable of running several instances (1, 2) of the proprietary mainframe software environment, with respective performance models, in respective virtual machines that are able to run concurrently on the hardware platform while all being hosted in the first pool of hardware resources of the hardware platform.

4. The mainframe computer according to any of claims 1 to 3, further including:
- an open software environment of which at least one instance (3, 4) is suitable for running concurrently on the hardware platform, in at least one second virtual machine that is able to run on the virtualization hypervisor software,
- and wherein:
- the hardware resources of the hardware platform include a second pool of hardware resources (200) created by configuring the virtualization hypervisor, for hosting, exclusively, the at least one second virtual machine; and
- the open software environment includes an open operating system (31, 41) responsible for connecting the hardware resources of the second pool of hardware resources, on one hand, and open-world applications (32, 42) configured to run on said open operating system, on the other hand, when said applications are running.

5. The mainframe computer according to claim 4, wherein the virtualization hypervisor software is capable of running a plurality of instances (3, 4) of virtual machines of the open software environment able to run concurrently on the hardware platform, while all being hosted in the second pool of hardware resources of the hardware platform.

6. The mainframe computer according to any of the preceding claims, wherein the virtualization hypervisor software is configured to allow the migration of an instance of the proprietary mainframe software environment, from a first server to a second server each having hardware resources participating in the first pool of hardware resources, so as to satisfy the availability constraints of the mainframe computer.

7. The mainframe computer according to any of the preceding claims, wherein the virtualization hypervisor is configured to allow access by the instances of the proprietary mainframe software environment to an external backup system (150) and/or to a dedicated storage network (160).

8. A method for configuring a mainframe computer to obtain a mainframe computer having a virtualized proprietary mainframe software environment, said computer comprising a hardware platform (10) with hardware resources including processors and memory, the method including the following steps:
- installing a virtualization hypervisor software (300);
- installing an open operating system (104);
- installing a proprietary mainframe software environment, comprising proprietary simulator software (101) and a proprietary operating system (102) of which at least one instance (1) is suitable for running on the hardware architecture, in at least one first virtual machine able to run on the virtualization hypervisor, the installation of a mainframe software environment comprising the following sub-steps:
- installing the proprietary simulator software (101) so that it can run on the open operating system;
- installing the proprietary operating system (102) so that it can run on the proprietary simulator software, for ensuring the connection between the hardware resources of the first pool of hardware resources through the proprietary simulator software, on one hand, and applications (103) configured to run on said proprietary operating system, on the other hand, when said applications are running while the proprietary simulator and the proprietary operating system are running on the open operating system (104); and,
- configuring the virtualization hypervisor to create a first pool (100) of hardware resources of the hardware platform that is dedicated to hosting, exclusively, the at least one first virtual machine in which the instance of the proprietary mainframe software environment can run.
